# EUROPEAN PATENT SPECIFICATION

(11) **EP 2 247 694 B1**
(45) Date of publication and mention of the grant of the patent: **17.04.2013**
(21) Application number: 09715364.7
(22) Date of filing: 23.02.2009
(51) Int. Cl.: C10G 45/62, C10G 65/04, B01J 21/12, B01J 23/46, B01J 35/10

(54) **PROCESS FOR IMPROVING THE FUEL QUALITY OF HYDROTREATED HYDROCARBON BLENDS**
VERFAHREN ZUR VERBESSERUNG DER BRENNSTOFFQUALITÄT VON WASSERSTOFFBEHANDELTEN KOHLENWASSERSTOFFGEMISCHEN
PROCÉDÉ PERMETTANT D AMÉLIORER LA QUALITÉ COMBUSTIBLE DE MÉLANGES D HYDROCARBURES HYDROTRAITÉS

(30) Priority: 26.02.2008 IT MI20080299
(43) Date of publication of application: 10.11.2010
(73) Proprietor: ENI S.p.A., 00144 Rome (IT)
(72) Inventor: CALEMMA, Vincenzo, I-20097 San Donato Milanese (Milano) (IT); FERRARI, Marco, Massimo, I-20148 Milano (IT); GAGLIARDI, Maria, Federica, I - 21053 Castellanza (Varese) (IT); BALDIRAGHI, Franco, I-20077 Melegnano (Milano) (IT)
(74) Representative: Bottero, Carlo
(86) International application number: PCT/EP2009/001366
(87) International publication number: WO 2009/106324

(56) References cited:
- EP-A- 1 147 811
- WO-A-98/05739
- WO-A-2007/006473
- US-A- 3 617 485

## Description

The present invention relates to a process for improving the fuel quality of hydrocarbon blends hydrotreated, and optionally dearomatized, particularly gas oil from hydrocracking and LCO. The process allows high-quality diesel fuels to be obtained by the practically complete removal of the total aromatic compounds, a decrease in the density and T₉₅ and an increase in the cetane number.

The production of fuels for use in new generation engines which reduce emissions is one of the major problems of the refinery industry. The definition of future fuel specifications is still a topic of discussion, but evolution towards increasingly restrictive regulations with respect to emissions is certain, and this will require products with significantly different characteristics than those currently in use, also from a compositional point of view.

With respect, in particular, to gas oil for auto-vehicles, in addition to the reduction in the sulfur content, other important aspects linked to the quality which will probably be the object of stricter regulations in the near future, are: the content of condensed polyaromatic compounds, the density, the T95 (temperature at which 95% of the product is distilled) and the cetane number or index. From this point of view, paraffins are considered the most desirable components, whereas polycondensed aromatic compounds are the least desirable as they have a very low cetane number and a much higher density than paraffins (especially if linear) with the same number of carbon atoms. Most probably, not all of the characteristics mentioned above will be the object of future regulations, however a reduction in aromatic compounds, and more particularly polyaromatic compounds, is a highly desirable result due to their direct impact on emissions (Fuel, Volume 82, Issue 4, March 2003, Pages 385-393, "The sources of polycyclic aromatic compounds in diesel engine emissions"). From a general point of view, it would be desirable to obtain a reduction in the content of aromatic structures through their hydrogenation and subsequent hydrodecyclization until normal and isoparaffins are obtained, and above all, n-paraffins, compatibly with the cold properties: the most desirable components are therefore isoparaffins with a low branching degree. This causes a distinct change in the properties of diesel fuels, such as:
● a decrease in the density;
● an increase in the cetane number;
● a reduction in emissions;
● a reduction in the boiling point with the same number of carbon atoms present in the molecule.

Processes commercially available for obtaining medium distillates with a reduced content of aromatic compounds are currently: dearomatization and hydrocracking. In the former case, the dearomatization of the feedstock essentially takes place by the hydrogenation of the aromatic structures with the formation of the corresponding naphthene structures. In this case there is:
● a reduction in the density;
● a reduction in the boiling point;
● a modest increase in the cetane number;
● a limited formation of products with a lower molecular weight with respect to the feedstock.

A simple reduction in aromatic compounds with cyclo-alkane structures preserves the yield to diesel but maintains undesired cyclic structures and does not significantly increase the cetane number (Fuel, Volume 85, Issue 5-6, March-April 2006, Pages 643-656, "Evaluation of different reaction strategies for the improvement of cetane number in diesel fuels").

In the latter case, hydrocracking, the opening of the cyclo-alkane structures to paraffins is obtained, with significant increases in the cetane number, but with a production of light fractions and a consequent loss in medium distillate.

The necessity is therefore felt for an alternative process which, in addition to saturating the aromatic rings, causes the selective opening of the naphthene rings (Selective Ring Opening, SRO); this overall process therefore converts the aromatic systems, with either one or more condensed rings, into paraffins which boil within the distillation range of gas oil. For this purpose, it is necessary for the opening of the naphthene ring to take place by breakage of a C-C endocyclic bond, so that the final paraffinic product has the same number of carbon atoms as the starting naphthene. It is also desirable for the C-C endocyclic bonds which are broken to also comprise those adjacent to the tertiary carbocation(s), in order to form mainly linear paraffins and isoparaffins with a weak branching degree.

In this respect, US 5,763,731 proposes the use of Ir together with an acid co-catalyst of the zeolitic type in order to favour the contraction of the rings having from 6 to 5 carbon atoms, as these can be more easily subjected to hydrogenolysis. This acidity causes the excessive formation of light cracking products and highly-branched paraffins, as a consequence of the skeleton isomerization reaction of the paraffins initially present and those formed as a result of the ring opening process.

In order to overcome this problem, US 2002/0050466 describes the use of an Ir-Pt bimetallic catalyst supported on Al₂O₃, whose content of each metal is lower than 2.0%, and preferably < 1.0%, regardless of the Ir/Pt ratio. Also in this case, the acidity is not suitably modulated so as to obtain a mixture of products having a high cetane number, to the extent that it is necessary to mix the products obtained with a gas oil having a cetane number of at least 40.

WO2005/103207 describes the upgrading of distillates containing naphthene compounds, by the transformation of said compounds into the corresponding paraffinic derivatives, prevalently branched, which uses catalysts containing Pt, Pd, Ir, Rh, Ru and Re and an acid silico-aluminate selected from a suitable micro-mesoporous silico-aluminate and a MTW zeolite.

WO2007/006473 describes a process for improving the fuel quality of hydrotreated hydrocarbon blends by enrichment in alkyl benzene compounds, at least partly deriving from the conversion of the naphtha-aromatic structures contained in said hydrotreated blends.

EP 1147811 describes a process for hydrotreating a hydrocarbon feed in the presence of a catalyst comprising iridium in a quantity between 0.01 and 5 wt.% and an acid component containing a completely amorphous micro-mesoporous silica alumina having a SiO₂/Al₂O₃ molar ratio ranging from 0.1 to 200, a surface area in the range of from 25 to 1200 m²/g and an average pore diameter higher than 20 Å.

The Applicant has now found that it is possible to improve the fuel properties of suitable hydrocarbon blends, in terms of a decrease in the density, increase in the cetane number, reduction in emissions and a reduction in the boiling point with the same number of carbon atoms present in the molecule, by eliminating their content of aromatic structures through their contemporaneous hydrogenation and hydrodecyclization, until a product is obtained prevalently containing n-paraffins, isoparaffins and mono-cyclic alkyl-naphthenes. The conversion of polycyclic naphthenes is higher than 50%. The new process which allows these results to be obtained uses a particular catalyst and suitable reaction conditions.

In particular, for the process of the present invention, a catalytic system has been found, which is capable of improving the fuel properties of suitable hydrocarbon blends, under appropriate reaction conditions, with a high selectivity to ring opening products, i.e. naphthenes containing only one ring, n-paraffins and isoparaf-fins, limiting cracking processes
- of the alkyl chains bound to the naphthene rings
- of the paraffins present in the feedstock
- of the paraffins formed initially by the hydrogenolysis process.

The overall advantage is to obtain a product which boils within the range of a gas oil cut, but which has a reduced density and an increased cetane number.

A first object of the present invention therefore relates to a process for improving the fuel properties of hydrotreated, and possibly dearomatized, hydrocarbon blends, by reaction with hydrogen, at a temperature ranging from 250 to 350°C, at a pressure higher than or equal to 50 bar, in the presence of a catalytic composition comprising:
a) a metallic component selected from:
   - iridium, in a quantity greater than or equal to 2% by weight with respect to the total weight of the catalytic composition,
   - a mixture of iridium and one or more metals Me selected from Pt, Pd, Ru, Rh, and Re, wherein said mixture is in a quantity greater than or equal to 2% by weight with respect to the total weight of the catalytic composition and is characterized by an Ir/Me weight ratio ranging from 2 to 10;
b) an acid component containing a completely amorphous micro-mesoporous silico-alumina having an SiO₂/Al₂O₃ molar ratio ranging from 50 to 500, a surface area greater than 500 m²/g, a pore volume ranging from 0.3 to 1.3 ml/g, an average pore diameter less than 40 Å.

The process of the present invention allows a substantial increase in the cetane index (number) to be obtained, a decrease in the density and T₉₅ of the blends thus treated. The product obtained is considerably enriched in n-paraffinic, iso-paraffinic compounds and alkyl-naphthene compounds with only one ring.

According to a particularly preferred aspect, the hydrotreated hydrocarbon blends are subjected to dearomatization, before being treated according to the process of the present invention. This treatment can be particularly useful for blends which would otherwise have the necessity of operating under excessively severe process conditions for reducing the content of aromatic compounds.

The particular catalytic composition selected and particular reaction conditions allow the characteristics of the hydrotreated hydrocarbon cuts to be significantly improved by saturation of the aromatic rings immediately followed by the selective opening of the naphthene ring in the corresponding aliphatic chains with the smallest possible formation of low-molecular-weight products; in this way there is a maximum gain in terms of density, boiling point and cetane number.

Component (b) preferably contains a silico-alumina with an SiO₂/Al₂O₃ molar ratio ranging from 50 to 300. According to another preferred aspect the silico-alumina has a porosity ranging from 0.4 to 0.5 ml/g.

Completely amorphous, micro-mesoporous silico-aluminas which can be useful for the present invention, called MSA, and their preparation, are described in US 5,049,536, EP 659478, EP 812804. Their powder XRD spectrum does not have a crystalline structure and does not show any peak.

Catalytic compositions which can be used in the present invention, wherein the acid component is a silico-alumina of the MSA type are described in EP 582347.

The silico-aluminas which can be adopted for the process of the present invention can be prepared, according to EP 659,478, starting from tetra-alkylammonium hydroxide, an aluminum compound hydrolyzable to Al₂O₃, and a silicon compound hydrolyzable to SiO₂, wherein said tetra-alkylammonium hydroxide is a tetra(C₂-C₅) alkylammonium hydroxide, said hydrolyzable aluminum compound is an aluminum tri(C₂-C₄)-alkoxide and said hydrolyzable silicon compound is a tetra(C₁-C₅) alkyl orthosilicate. These reagents are subjected to hydrolysis and gelification operating at a temperature equal to or higher than the boiling point, at atmospheric pressure, of any alcohol which is formed as by-product of said hydrolysis reaction, without the elimination or substantial elimination of said alcohols from the reaction environment.

The gel thus produced is dried and calcined, preferably in an oxidizing atmosphere at a temperature ranging from 500 to 700°C, for a period of 6-10 hours.

The procedure comprises preparing an aqueous solution of tetra-alkylammonium hydroxide and aluminum trialkoxide; the tetra-alkyl orthosilicate is added to this aqueous solution, operating at a temperature lower than the hydrolysis temperature, with a quantity of reagents which is such as to respect molar ratios of SiO₂/Al₂O₃ ranging from 30/1 to 500/1, tetra-alkylammonium hydroxide/SiO₂ from 0.05/1 to 0.2/1 and H₂O/SiO₂ from 5/1 to 40/1, and the hydrolysis and gelification are triggered by heating to a temperature ranging from 65°C to 110°C, operating in an autoclave at the autogenous pressure of the system or at atmospheric pressure in a reactor equipped with a condenser.

Component (b) of the catalyst which is used in the process of the present invention is preferably an extruded product, with traditional ligands, such as for example aluminum oxide, bohemite or pseudobohemite. The extruded product can be prepared according to methods well-known to experts in the field. The micro-mesoporous silico-alumina and the ligand can be premixed in weight ratios ranging from 30:70 to 90:10, preferably from 50:50 to 70:30. At the end of the mixing, the product obtained is consolidated into the desired final form, for example in the form of extruded pellets or tablets.

According to the most preferred embodiment, the methods and ligands described in EP 550922 and EP 665055 can be used, the latter, being particularly preferred.

In accordance with this, a particularly preferred aspect of the present invention therefore uses a catalytic composition in which component (b) contains micro-mesoporous silico-alumina in the form of an extruded product with alumina, and is prepared, according to EP 665055, by means of a process which comprises the following steps:
(A) preparing an aqueous solution of a tetra-alkyl ammonium hydroxide (TAA-OH), a soluble aluminum compound capable of hydrolyzing into Al₂O₃ and a silicon compound capable of hydrolyzing into SiO₂, in the following molar ratio with each other:

| | |
|---|---|
| SiO₂/ Al₂O₃ | from 30/1 to 500/1 |
| TAA-OH/ SiO₂ | from 0.05/1 to 0.2/1 |
| H₂O/ SiO₂ | from 5/1 to 40/1 |

(B) heating the solution thus obtained to cause its hydrolysis and gelification and obtaining a blend with a viscosity ranging from 0.01 to 100 Pa sec;
(C) adding to said blend first a ligand belonging to the group of bohemites or pseudo-bohemites, in a weight ratio with the mixture A ranging from 0.05 to 0.5, and then a mineral or organic acid in a quantity ranging from 0.5 to 8.0 g per 100 g of ligand;
(D) heating the mixture obtained under point (C), under mixing, to a temperature ranging from 40 to 90°C, until a homogeneous paste is obtained which is subjected to extrusion and granulation;
(E) drying the extruded product and calcining it in an oxidizing atmosphere.

In step (C), plasticizing agents, such as methyl cellulose, are also preferably added to favour the formation of a homogeneous and easily processable paste.

In this way, a granular acid component (b) is obtained, preferably containing a quantity of 30 to 70% by weight of inert inorganic ligand, the remaining amount consisting of amorphous silico-alumina essentially having the same porosity, surface extension and structure characteristics described for the same silico-alumina without a ligand.

With respect to the metallic component of the catalytic compositions used in the process of the present invention, this is selected from:
- iridium, in a quantity greater than or equal to 2% by weight with respect to the total weight of the catalytic composition,
- a mixture of iridium and one or more metals Me selected from Pt, Pd, Ru, Rh, and Re, wherein said mixture is in a quantity greater than or equal to 2% by weight with respect to the total weight of the catalytic composition and is characterized by an Ir/Me weight ratio ranging from 2 to 10.

A preferred aspect of the present invention is to use Ir or mixtures of iridium and platinum as metallic component.

The iridium, when present alone in the catalytic composition, is preferably in a quantity ranging from 2 to 10% by weight, even more preferably greater than or equal to 2% and less than 5% by weight. Excellent results are obtained by operating with Ir in a quantity which varies from 3 to 4% by weight with respect to the total weight of the catalytic composition itself. When the metallic component consists of Iridium and one or more metals Me, said mixture is preferably in a quantity ranging from 2 to 10% by weight, even more preferably greater than or equal to 2% and less than 5% by weight. Excellent results are obtained by operating with a mixture of Ir and metal Me in a quantity which varies from 3 to 4% by weight with respect to the total weight of the catalytic composition itself.

The weight percentage of iridium and the metals Me refers to the content of element expressed as metallic element; in the end-catalyst, after calcination, these elements are in oxide form.

Before being used, the catalyst is activated using known techniques, for example by means of a reduction treatment, and preferably by means of drying and subsequent reduction. The drying is effected in an inert atmosphere at temperatures ranging from 25 to 100°C, whereas the reduction is obtained by thermal treatment of the catalyst in a reducing atmosphere (H₂) at a temperature ranging from 300 to 450°C, and a pressure preferably ranging from 1 to 50 atm.

With respect to the metallic component (a) of the catalyst, consisting of iridium or a mixture of iridium and one or more metals Me selected from Pt, Pd, Ru, Rh, and Re, this can be introduced by means of impregnation or ion exchange. According to the first technique, when the composition contains iridium alone, the component of an acid nature (b), also in extruded form, is wet with an aqueous solution of a compound of iridium, operating, for example, at room temperature, and at a pH ranging from 1 to 4. The resulting product is dried, preferably in air, at room temperature, and is calcined in an oxidizing atmosphere at a temperature ranging from 200 to 600°C.

In the case of alcohol impregnation, the component (b) is suspended in an alcohol solution containing iridium. After impregnation, the solid is dried and calcined.

According to the ion exchange technique, the component (b) is suspended in an aqueous solution of a complex or salt of Iridium, operating at room temperature and at a pH ranging from 6 to 10. After the ion exchange, the solid is separated, washed with water, dried and finally thermally treated in an inert or oxidizing atmosphere. Temperatures useful for the purpose are those ranging from 200 to 600°C.

Iridium compounds which can be appropriately used are H₂IrCl₆, (NH₄)₂IrCl₆, [CH₃COCH=C(O⁻)CH₃]₃Ir.

When the catalytic composition comprises, in addition to Iridium, one or more metals Me, the impregnation is carried out as follows: component (b), also in extruded form, is wet with a solution of a compound of iridium, the resulting product is dried, it is optionally calcined, and is impregnated with a solution of a compound of a second metal Me. It is dried and a calcination is then effected in an oxidizing atmosphere at a temperature ranging from 200 to 600°C. The sequence can be inverted and the metal Me can be introduced before the Iridium. Alternatively, a single aqueous solution containing two or more compounds of Iridium and metals Me can be used for contemporaneously introducing said metals.

Metal compounds which can be used in the preparations described above are: H₂PtCl₆, Pt (NH₃)₄(OH)₂, Pt(NH₃)₄Cl₂, Pd(NH₃)₄(OH)₂, PdCl₂, RuCl₃, RhCl₃, NH₄ReO₄.

The catalytic compositions used in the present invention are new and are a further object of the present invention.

The hydrotreated hydrocarbon blends which can be subjected to the process of the present invention are blends having boiling points within the range of about 150°C to 450°C, preferably from 180°C to 360°C, even more preferably from 220°C to 360°C.

In particular, particularly suitable are hydrocarbon cuts obtained from the hydrotreatment of oil cuts such as naphtha, gas oil, the latter regardless of the original refinery treatment, kerosene, jet fuel, light cycle oil (LCO), HVGO or FCC heavy fractions, or by the hydrotreatment of cuts of a petrochemical origin, such as, for example, FOK (fuel oil cracking). A particularly preferred aspect of the present invention is to use gas oil as hydrocarbon blend, preferably from hydrocracking or FCC, the latter corresponding to Light Cycle Oil.

The hydrocarbon cuts subjected to hydrotreatment for providing the hydrotreated hydrocarbon blends used in the process of the present invention have a content of aromatic compounds preferably greater than 20%, and even more preferably greater than 40%, mainly consisting of mono-aromatic compounds, diaromatic compounds and, to a lesser degree, triaromatic compounds. In addition to reducing the sulphur and nitrogen content, the hydrotreatment varies the nature and composition of the hydrocarbon cut subjected thereto and, among other things, enriches the cut in benzonaphthene compounds which, under the conditions of the present invention, using the particular catalytic composition described above, are transformed into alkyl-naphthenes with one ring only, n-paraffins and isoparaffins.

Hydrotreatment is a process which is well-known to experts in the field and is described, for example, in Catalysis-Science and Technology, Edited by R. Anderson and M. Boudart, Volume 11, Springer-Verlag, of 1996. It can be effected in one or more fixed bed reactors, and the catalytic beds can contain the same or different catalysts. Catalysts based on metallic compounds of Group VI, and/or Group VIII, are usually used, on a carrier, preferably amorphous, such as, for example, alumina or silica-alumina. Metals which can be well used are, for example, nickel, cobalt, molybdenum and tungsten. Examples of suitable catalysts and their preparation are described in Hydrocracking Science and Technology, J. Scherzer and A.J. Gruia, Marcel Dekker, 1996.

The hydrotreatment catalysts are used in sulfidated form. The sulfidation can be obtained, for example, by sending a suitable charge onto the catalyst, containing a sulfurated compound such as Dimethyldisulfide (DMDS), Dimethylsulfoxide (DMSO) or other compounds which, upon decomposing, lead to the formation of H₂S.

The hydrotreatment is preferably carried out at a temperature ranging from 200°C to 400°C. The pressure normally range from 20 to 100 bar, depending on the catalyst used, an expert in the field can easily identify the best conditions for the catalyst selected. During the hydrotreatment, the heteroatoms N and S are eliminated and the feedstock also undergoes saturation reactions of the aromatic rings with a reduction in the content of aromatic carbon and an enrichment in naphtho-aromatic compounds which are particularly suitable for being treated according to the process of the present invention to give mainly linear paraffins.

According to a particularly preferred aspect of the present invention, the hydrotreated hydrocarbon blends are subjected to dearomatization before being fed to the process. During this dearomatization treatment, the hydrotreated hydrocarbon blend is reacted with hydrogen in the presence of a catalyst consisting of noble metals supported on SiO₂ or Al₂O₃, at a temperature ranging from 200 to 300°C and a pressure of 20 to 60 atm. It is preferable to operate at a WSHV ranging from 0.5 to 3 hours⁻¹. The ratio between hydrogen and feedstock (H₂/HC) preferably ranges from 600 to 1,000 Nlt/kg.

The process of the present invention which allows an increase in the cetane number, a decrease in the density and T₉₅ of hydrotreated, and possibly dearomatized, hydrocarbon blends, is preferably carried out at a temperature ranging from 250 to 350°C, at a pressure higher than or equal to 50 bar and lower than 100 bar, even more preferably higher than 50 bar and lower than 80 bar. The WHSV can range from 1 to 3 hours⁻¹ and a ratio between hydrogen and feedstock (H₂/HC) ranging from 400 to 2,000 Nlt/kg can be used.

The following experimental examples are provided for a better illustration of the present invention.

### Example 1

### Preparation of catalyst A: Silico-alumina MSA-Al₂O₃/4% Ir

### 1) Preparation of the acid component (b): silico-alumina MSA, in extruded form with alumina

23.5 litres of demineralized water, 19.6 kg of aqueous solution at 14.4% by weight of TPA-OH and 1,200 g of aluminum tri-isopropoxide are introduced into a 100 litre reactor. The mixture is heated to 60°C and maintained under stirring at this temperature for 1 hour, in order to obtain a limpid solution. The temperature of the solution is then brought to 90°C and 31.1 kg of tetra-ethyl silicate are rapidly added. The reactor is closed and the stirring rate is regulated at about 1.2 m/s, the mixture being maintained under stirring for three hours at a temperature ranging from 80 to 90°C, with thermostatic control to remove the heat produced by the hydrolysis reaction. The pressure in the reactor rises to about 0.2 MPag. At the end, the reaction mixture is discharged and cooled to room temperature, obtaining a homogeneous and relatively fluid gel (viscosity 0.011 Pa●s) having the following composition molar ratios:
SiO₂/Al₂O₃ = 100
TPA.OH/SiO₂ = 0.093
H₂O/SiO₂ = 15

After removing a sample to be used for the characterization of the silico-alumina, the gel is subjected to extrusion to prepare the silico-alumina MSA in extruded form with alumina, to be used as component (b) of the catalyst A and subsequent catalysts B (example 2) and C (example 3) in accordance with the invention, and catalyst D (example 4): 1,150 g of alumina (VERSAL 150), previously dried for 3 hours in air at 150°C are introduced into a plough mixer, maintained at a stirring rate of 70-80 revs per minute. 5,000 g of the homogeneous gel obtained above are then added, over a period of about 15 minutes, and the mixture is left to rest for about 20 hours. It is left under stirring for about 1 hour. A solution at 50% of glacial acetic acid, equal to 100 ml is slowly added over a period of 15 minutes; the temperature of the mixer is brought to about 70-80°C, continuing with the stirring until a homogeneous paste having the desired consistency for the subsequent extrusion, is obtained.

The homogeneous paste thus obtained is charged into an extruder of the HUTT type, extruded and cut into cylindrical pellets of the desired size (approximately 2 x 4 mm). The product is left to rest for about 6-8 hours and then dried maintaining it in a stream of air at 100°C for 5 hours. It is finally calcined in a muffle at 550°C for 3 hours under a flow of nitrogen and for a further 8 hours in air. The resulting material is an MSA silico-alumina in extruded form with alumina and is used as component (b) of catalyst A, of the following catalysts B and C (examples 2 and 3), all according to the invention, and the comparative catalyst D (example 4).

For characterization of the silico-alumina, the sample of gel previously removed is left to rest for about 6-8 hours, dried in a stream of air at 100°C until the weight becomes constant and is then calcined in a muffle at 550°C for 8 hours in air. The resulting porous solid, with acidic characteristics, consists of silica-alumina with an SiO₂/Al₂O₃ molar ratio of 100, a surface area of 794 m²/g, a pore volume of 0.42 ml/g, an average diameter of 21 Å. Upon X-ray analysis, the solid proves to be substantially amorphous, the powder XRD spectrum does not have a crystalline structure and does not show any peak.

### 2) Deposition of iridium (4.0% by weight Ir)

In order to disperse the iridium on the acid component (b) prepared according to the previous point (1), an aqueous solution of hexachloroiridic acid (H₂IrCl₆), hydrochloric acid and acetic acid in the following molar ratios: Ir/HCl/CH₃COOH = 1/2.1/0.3, having a concentration of iridium of 2.89 % (w/w). 23.63 g of this solution were added to 16.4 g of the acid component (b) prepared as described in the previous point (1), so that all the solid is covered by the solution. The mixture thus obtained is maintained under stirring for about an hour at room temperature and under vacuum (about 18 mmHg), subsequently removing the solvent by heating to about 80-90°C under vacuum. The drying was completed at 135°C for 18 hours. The dry product was finally calcined in a stream of air with the following temperature profile 25-330°C in 2 hours, 330°C for 1 minute, 330-360°C in 1 hour, at 360°C for 3 hours.

An extruded product is obtained, whose acid component is a silico-alumina of the MSA type in extruded form with alumina and the metal is iridium in a quantity equal to 4% with respect to the total weight of the catalytic composition. For the catalytic tests, the extruded product was ground and sieved at 20-40 mesh.

### Example 2

### Preparation of catalyst B: Silico-alumina MSA-Al₂O₃/2.5% Ir/0.5%Pt

### 1) Preparation of the acid component (b): silico-alumina MSA, in extruded form with alumina

The same procedure is effected as described under point (1) of the previous example 1.

### 2) Deposition of iridium (2.5% by weight Ir) and platinum (0.5% by weight)

In order to disperse the iridium and platinum on the acid component (b), the following solutions of the two metals were mixed:
- a solution of hexachloroiridic acid, hydrochloric acid and acetic acid in water in the following molar ratios: H₂IrCl₆/HCl/CH₃COOH = 1/2.1/0.3, and with a concentration of iridium of 2.89 % (w/w)
- a solution of hexachloroplatinic acid, hydrochloric acid and acetic acid in water, in the following molar ratios: H₂PtCl₆/HCl/CH₃COOH = 1/0.84/0.05, having a platinum concentration of 1.39 mgr Pt/gr solution.

In the final solution (consisting of 18.0 gr solution Ir + 75.0 gr solution Pt), the molar ratio Ir/Pt = 5.1/1.

About 1/2 of the solution obtained is dripped onto 20.99 gr of the acid component (b) prepared according to point (1); this quantity of solution is sufficient to completely cover the solid. The mixture thus obtained was maintained under stirring for about an hour at room temperature and under vacuum, the solvent was subsequently removed by heating to about 80-90°C under vacuum. The dripping operation of the Ir/Pt solution onto component (b) and subsequent removal of the solvent was repeated until all the solution had been used up. The drying was completed at 135°C and the dry product was calcined under the conditions described for example 1. An extruded product is obtained, whose acid component is a silico-alumina of the MSA type in extruded form with alumina and the metallic component consists of Ir and Pt. For the catalytic tests, the extruded product was ground and sieved at 20-40 mesh.

### Example 3

### Preparation of catalyst C: Silico-alumina MSA-Al₂O₃/3.35% Ir/0.65%Pt

### 1) Preparation of the acid component (b): MSA, in extruded form with alumina

The same procedure is effected as described under point (1) of the previous example 1.

### 2) Deposition of iridium (3.35% by weight Ir) and platinum (0.65% by weight)

In order to disperse the iridium and platinum on the acid component (b), the following solutions of the two metals were mixed:
- a solution of hexachloroiridic acid, hydrochloric acid and acetic acid in water in the following molar ratios: H₂IrCl₆/HCl/CH₃COOH = 1/2.1/0.3, and with a concentration of iridium of 3.677 % (w/w)
- a solution of hexachloroplatinic acid, hydrochloric acid and acetic acid in water, in the following molar ratios: H₂PtCl_{6/}HCl/CH₃COOH = 1/0.84/0.05, having a platinum concentration of 1.39 mgr Pt/gr solution.

In the final solution (consisting of 8.65 gr solution Ir + 43.85 gr solution Pt), the molar ratio Ir/Pt = 5.2/1.

About 1/3 of the solution obtained is dripped onto 9.11 gr of the acid component (b) prepared according to point (1) (quantity of solution sufficient for completely covering the solid). The mixture thus obtained was maintained under stirring for about an hour at room temperature and under vacuum, the solvent was subsequently removed by heating to about 80-90°C under vacuum. The impregnation of the Ir/Pt solution onto the carrier and subsequent removal of the solvent was repeated 3 times, until all the solution with the metals had been deposited on the acid component (b). The drying was completed at 110°C and the dry product was calcined under the conditions described for example 1.

An extruded product is obtained, whose acid component is a silico-alumina of the MSA type in extruded form with alumina and the metallic component consists of Ir and Pt. For the catalytic tests, the extruded product was ground and sieved at 20-40 mesh.

### Example 4 (comparative)

### Preparation of catalyst D: Silico-alumina MSA-Al₂O₃/1% Ir

### 1) Preparation of the acid component (b): MSA, in extruded form with alumina

The same procedure is effected as described under point (1) of the previous example 1.

### 2) Deposition of iridium (1.0% by weight Ir)

In order to disperse the iridium on the acid component, an aqueous solution of hexachloroiridic acid, hydrochloric acid and acetic acid was used in the following molar ratios: H₂IrCl₆/HCl/CH₃COOH = 1/2.1/0.3, having a concentration of iridium of 3.0 % (w/w).

6.73 g of the solution with Iridium at 3.0% were diluted with 15 ml of water and then dripped onto 20 g of the acid component (b) prepared as described in the previous step (1). The suspension thus obtained was kept in a closed container at 40°C for 1 hour, the water was then eliminated by heating to 80-90°C for 2 hours and the drying was completed at 120°C for a night. The dry product was finally calcined in a stream of air with the following temperature profile 25-330°C in 2 hours, at 330°C for 2 hours, 330-360°C in 60 minutes, at 360°C for 3 hours.

An extruded product is obtained, whose acid component is a silico-alumina of the MSA type in extruded form with alumina and the metal consists of Ir in a quantity equal to 1% with respect to the total weight of the catalytic composition. For the catalytic tests, the extruded product was ground and sieved at 20-40 mesh.

### Example 5 (comparative)

### Catalyst E: commercial silico-alumina/1% Ir

A quantity of Ir equal to 1% by weight is deposited on a commercial silico-alumina (PK200 SOLVAY) having the following characteristics:
- weight % composition = 90% SiO₂, 10% Al₂O₃
- molar ratio SiO₂/Al₂O₃ = 15.3
- surface area = 450 m²/g
using an aqueous solution of hexachloroiridic acid, hydrochloric acid and acetic acid in the following molar ratios: H₂IrCl₆/HCl/CH₃COOH = 1/2.1/0.3, having a concentration of iridium of 3.0 % (w/w).

10.10 g of the solution with Iridium at 3.0% were diluted with 25 ml of water and then dripped onto 30 g of the commercial silico-alumina, so that all the solid is covered by the solution. The suspension thus obtained was kept in a closed container at 40°C for 1 hour, the water was then eliminated by heating to 80-90°C for 2 hours and the drying was completed at 120°C for a night. The dry product was finally calcined in a stream of air with the following temperature profile 25-330°C in 2 hours, at 330°C for 2 hours, 330-360°C in 60 minutes, at 360°C for 3 hours.

### Example 6 (comparative)

### Preparation of the catalyst F: ZSM-12/1% Ir

### (1) Preparation of the ZSM-12 zeolite

127 grams of tetra-ethyl ammonium hydroxide at 40% by weight, in aqueous solution are added to 24 grams of demineralized water. 4 grams of sodium aluminate are then added to 56% by weight of Al₂O₃. The limpid solution thus obtained is poured, under stirring, into 350 grams of colloidal silica Ludox HS 40. After brief stirring, a homogeneous limpid gel is obtained, which is poured into a 1 litre autoclave, made of AISI 316 steel, equipped with an anchor stirrer. The gel is left to crystallize under hydrothermal conditions at 160°C for 60 hours. At the end of this phase, the autoclave is cooled to room temperature. The slurry obtained is homogeneous and has a latescent appearance. The slurry is centrifuged. The solid discharged is washed by re-dispersion in water, centrifuged again, dried at 120°C and calcined at 550°C for 5 hours. Upon X-ray diffraction analysis the solid obtained proves to consist of pure ZSM-12. The solid obtained is subsequently exchanged into ammonia form by treatment with a solution of ammonium acetate 3 M. Upon subsequent calcination at 550°C for 5 hours, the zeolite is obtained in acid form.

### 2) Deposition of iridium (1.0% Ir)

A quantity of Iridium equal to 1% by weight is deposited on the zeolite prepared according to the previous point (1), having an SiO₂/Al₂O₃ ratio = 100, using an aqueous solution of hexachloroiridic acid, hydrochloric acid and acetic acid in the following molar ratios: H₂IrCl₆/HCl/CH₃COOH = 1/2.1/0.3, having a concentration of iridium of 3.0 % (w/w).

6.66 g of the solution with Iridium at 3.0% were diluted with 20 ml of water and then dripped onto 19.80 g of ZSM-12, so that all the solid is covered by the solution. The suspension thus obtained is kept under stirring for about an hour at room temperature under vacuum, the solvent was then removed by heating to 80°C under vacuum. The drying is completed at 100°C for a night and the dry product is subsequently calcined in a stream of air with the following temperature profile 25-330°C in 2 hours, at 330°C for 2 hours, 330-360°C in 60 minutes, at 360°C for 3 hours.

A ZSM-12 zeolite is obtained with 1.0% of Iridium.

### Example 7

### Catalytic test

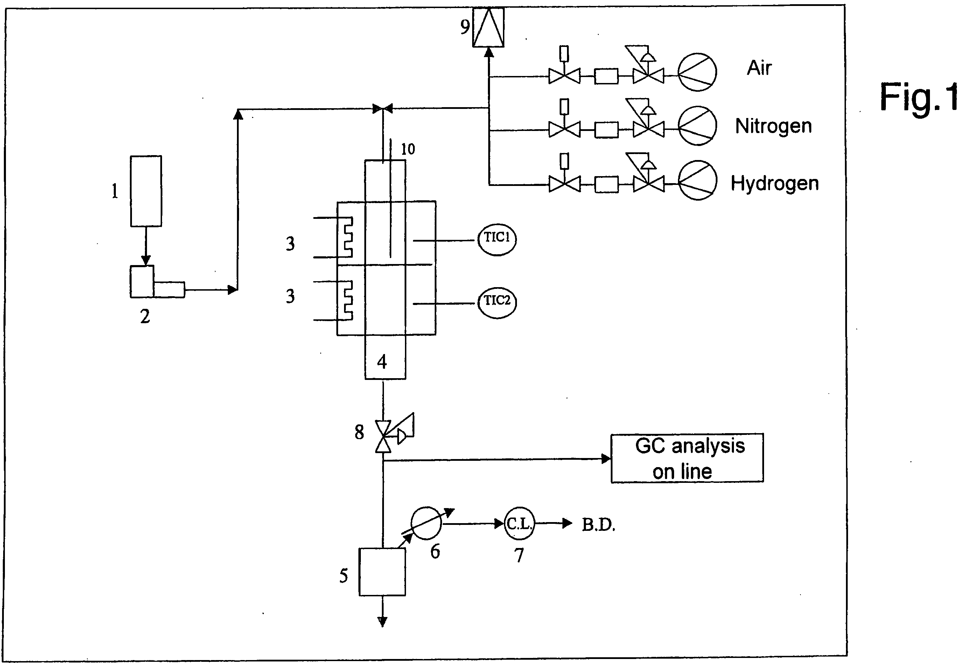

The catalytic activity tests were carried out on a continuous laboratory plant shown in Figure 1. The system consists of a tubular fixed bed reactor (4) with a useful volume of feedstock of 20 cm³ corresponding to a height of the catalytic bed in the isotherm section of 10 cm. The feeding of the feedstock, contained in the tank (1) and hydrogen to the reactor are effected by means of a dosage pump (2) and a mass flow meter, respectively. The system is also equipped with two gas lines (air and nitrogen) which are used in the regeneration phase of the catalyst. The reactor operates in an equicurrent downflow system. The temperature of the reactor is regulated by means of an oven with two heating elements (3) whereas the temperature control of the catalytic bed is effected by means of a thermocouple (10) positioned inside the reactor.

The pressure of the reactor is regulated by means of a valve (8) downstream of the reactor. The reaction products are collected in a separator (5) which operates at room temperature and atmospheric pressure. The products leaving the separator (5) pass into a condenser (6) cooled to 5°C and are subsequently sent to a gas meter (C.L.) (7) and then to the blow-down (B.D.). (9) is the breakage disk. The distribution of the products and conversion level are determined by means of mass balance and gas chromatographic analysis of the reaction products.

In the apparatus described above the catalysts A, B, C, D, E, F of examples 1-6 are tested in the process of the present invention. Hydrotreated and dearomatized LCO (Light Cycle Oil) is used as substrate, whose characteristics are indicated in Table A below.

**Table A**

| | | |
|---|---|---|
| Density 15°C, g/cm³ | | 0.8370 |
| Density 15°C, g/cm³ 180°+ Distillation ASTM D86 | | 0.8432 |
| IBP (Initial boiling point) °C | | 166.5 |
| 10%v, °C | | 193.0 |
| 30%v, °C | | 212.0 |
| 50%v, °C | | 225.0 |
| 70%v, °C | | 248.5 |
| 90%v, °C | | 285.0 |
| FBP (final boiling point) °C | | 334.0 |
| T₉₅ °C | | 307.6 |
| T₉₅ °C 180°+ | | 329.2 |
| Cetane index (4V) | | 41.4 |
| Cetane index (4V) 180°+ | | 41.8 |
| Aromatic compounds (HPLC) | | |
| | Mono-aromatic compounds, w% | 0.4 |
| | Di-aromatic compounds, w% | 0.1 |
| | Tri-aromatic compounds, w% | 0.0 |
| | Total, w% | 0.5 |
| Sulfur, ppmwt | | 0.48 |
| Nitrogen, ppmwt | | 0.85 |
| Carbon, ppmwt | | 85.40 |
| Hydrogen, % | | 14.34 |

The feedstock indicated in Table A was obtained by the dearomatization of a hydrotreated LCO, whose characteristics are indicated in Table B.

The dearomatization was effected in a fixed bed pilot plant using a commercial hydrogenation catalyst based on Pd and Pt (Albermarle KF-200) under the following operating conditions:
P = 50 bars,
WABT (weight average bed temperature) = 230°C
LHSV = 1.25 hours⁻¹
H₂/LCO = 800 Nl/l

**Table B**

| | | |
|---|---|---|
| Density 15°C, g/cm³ | | 0.8794 |
| Distillation ASTM D86 | | |
| IBP, °C | | 180.3 |
| 10%v, °C | | 209.3 |
| 30%v, °C | | 226.2 |
| 50%v, °C | | 242.3 |
| 70%v, °C | | 262.2 |
| 90%v, °C | | 298.8 |
| FBP, °C | | 335.1 |
| T₉₅ °C | | 317.0 |
| Cetane index (4V) | | 33.0 |
| Aromatic compounds (HPLC) | | |
| | Mono-aromatic compounds, w% | 65.4 |
| | Di-aromatic compounds, w% | 5.2 |
| | Tri-aromatic compounds, w% | 0.4 |
| | Total, w% | 71.0 |
| Sulfur, ppm | | 6.6 |
| Nitrogen, ppm | | n.d. |
| Carbon, wt% | | 87.79 |
| Hydrogen, wt% | | 11.98 |

Before being tested, the catalysts were activated as follows:
1) 1 hour at room temperature in a nitrogen stream;
2) heating from room temperature to 300°C with a profile of 1.5°C/min in a hydrogen stream;
3) the temperature is kept constant at 300°C for 30 minutes in nitrogen and for the following 4 hours in a hydrogen stream, and is then brought to the test temperature.

During the activation, the pressure in the reactor is maintained at between 2.0 and 6.0 MPa (20 and 60 atm).

The results of the conversion of the hydrotreated feedstock of Table A, in the presence of catalysts A, B and C, according to the invention, and D, E and F, comparative, are indicated in Table C, in which:
- The Yield to gas oil is the percentage of products with a boiling point higher than 150°C (gas oil fraction), determined by simulated distillation SIMDIST 2887;
- The Cetane Index (4v) is the cetane index of the gas oil fraction of the products, calculated, on the basis of the formula of the 4 variables, from the data of the distillate D86 and density at 15°C, measured on the same gas oil fraction.

All the tests were effected using a H₂/HC ratio of 2,000 Nlt/Kg.

The data in the first line of Table C refer to the characteristics of the hydrotreated and dearomatized blend (Table A), before being fed to the process of the present invention.

The data indicated in the table show that the use of catalysts A, B, C according to the invention lead to a considerable increase in the cetane number, up to 5.7 units, against a yield to gas oil higher than 80%. Following the treatment according to the process of the present invention, the density undergoes a considerable reduction (even of 4.8%), again for yields higher than 80%. Furthermore, with the catalysts of the present invention a reduction in the T₉₅ is obtained, which also reaches a value of 13% with catalyst C.

With the comparative catalysts D, E and F, on the contrary, there is no increase in the cetane number and there is a more limited reduction in the density.

**Table C**

| **Catalyst** | **T °C** | **P atm** | **WHSV hrs⁻¹** | **Gas oil yield %** | **T₉₅ °C** | **Cetane Index 4V** | **Density 15 °C Kg/l** |
|---|---|---|---|---|---|---|---|
| LCO-HDT (tab.A) | - | - | - | 100,0 | 329,2 | 41,8 | 0,8432 |
| A | 290 | 70 | 1 | 92,0 | 292,5 | 45,0 | 0,8261 |
| A | 300 | 70 | 1 | 85,0 | 273,4 | 46,0 | 0,8154 |
| B | 280 | 70 | 1 | 91,5 | 314,9 | 43,5 | 0,8334 |
| B | 310 | 70 | 1 | 81,0 | 269,5 | 47,1 | 0,8125 |
| C | 310 | 70 | 1 | 90,0 | 276,0 | 47,1 | 0,8148 |
| C | 315 | 70 | 1 | 73,1 | 262,4 | 49,6 | 0,8047 |
| 1%Ir/MSA (D) | 280 | 70 | 3 | 94,5 | 319,5 | 41,7 | 0,8401 |
| 1%Ir/MSA (D) | 310 | 70 | 3 | 88,0 | 308,0 | 41,9 | 0,8346 |
| 1%Ir/PK200 (E) | 280 | 70 | 1 | 96,3 | 311,5 | 41,9 | 0,8344 |
| 1%Ir/PK200 (E) | 300 | 70 | 1 | 83,0 | 283,6 | 42,1 | 0,8245 |
| 1%Ir/ZSM-12 (F) | 280 | 60 | 1 | 91,6 | 285,2 | 39,1 | 0,8394 |
| 1%Ir/ZSM-12 (F) | 300 | 60 | 2 | 84,0 | 291,5 | 37,9 | 0,8407 |

## Claims

1. A process for improving the fuel properties of hydrotreated, and possibly dearomatized, hydrocarbon blends, by reaction with hydrogen, at a temperature ranging from 250 to 350°C, at a pressure higher than or equal to 50 bar, in the presence of a catalytic composition comprising:
a) a metallic component selected from:
- iridium, in a quantity greater than or equal to 2% by weight with respect to the total weight of the catalytic composition,
- a mixture of iridium and one or more metals Me selected from Pt, Pd, Ru, Rh, and Re, wherein said mixture is in a quantity greater than or equal to 2% by weight with respect to the total weight of the catalytic composition and is **characterized by** an Ir/Me weight ratio ranging from 2 to 10;
b) an acid component containing a completely amorphous micro-mesoporous silico-alumina having an SiO₂/Al₂O₃ molar ratio ranging from 50 to 500, a surface area greater than 500 m²/g, a pore volume ranging from 0.3 to 1.3 ml/g, an average pore diameter less than 40 Å.

2. The process according to claim 1, wherein the silico-alumina has an SiO₂/Al₂O₃ molar ratio ranging from 50 to 300.

3. The process according to claim 1, wherein the silico-alumina has a porosity ranging from 0.4 to 0.5 ml/g.

4. The process according to claim 1, wherein the silico-alumina has a powder XRD spectrum which does not have a crystalline structure and does not show any peak.

5. The process according to claim 1, wherein component (b) of the catalytic composition contains silico-alumina in extruded form with a ligand.

6. The process according to claim 5, wherein the ligand is selected from aluminum oxide, bohemite or pseudobohemite.

7. The process according to claim 1 or claim 6, wherein component (b) contains silico-alumina in extruded form with alumina and is prepared by means of a process which comprises the following steps:
(A) preparing an aqueous solution of a tetra-alkyl ammonium hydroxide (TAA-OH), a soluble aluminum compound capable of hydrolyzing into Al₂O₃ and a silicon compound capable of hydrolyzing into SiO₂, in the following molar ratio with each other:
| | |
|---|---|
| SiO₂/ Al₂O₃ | from 30/1 to 500/1 |
| TAA-OH/ SiO₂ | from 0.05/1 to 0.2/1 |
| H₂O/ SiO₂ | from 5/1 to 40/1 |
(B) heating the solution thus obtained to cause its hydrolysis and gelification and obtaining a blend with a viscosity ranging from 0.01 to 100 Pa sec;
(C) adding to said blend first a ligand belonging to the group of bohemites or pseudobohemites, in a weight ratio with the mixture A ranging from 0.05 to 0.5, and then a mineral or organic acid in a quantity ranging from 0.5 to 8.0 g per 100 g of ligand;
(D) heating the mixture obtained under point (C), under mixing, to a temperature ranging from 40 to 90°C, until a homogeneous paste is obtained which is subjected to extrusion and granulation;
(E) drying the extruded product and calcining it in an oxidizing atmosphere.

8. The process according to one or more of the previous claims, wherein the metallic component (a) is selected from iridium or mixtures of iridium and platinum.

9. The process according to claim 1 or 8, wherein the metallic component is iridium in a quantity ranging from 2 to 10% by weight with respect to the total weight of the catalytic composition.

10. The process according to claim 9, wherein the iridium is in a quantity greater than or equal to 2 and less than 5% by weight.

11. The process according to claim 1 or 8, wherein the metallic component consists of Iridium and one or more metals, and is in a quantity greater than or equal to 2 and less than 5% by weight.

12. The process according to claim 1, wherein the hydrotreated hydrocarbon blends are blends having boiling points within the range of 150 to 450°C.

13. The process according to claim 12, wherein the hydrotreated hydrocarbon blends are blends having boiling points within the range of 180 to 360°C.

14. The process according to claim 13, wherein the hydrotreated hydrocarbon blends are blends having boiling points within the range of 220 to 360°C.

15. The process according to claim 1 or claim 12, wherein the hydrotreated hydrocarbon blends are obtained from the hydrotreatment of oil cuts such as naphtha, gas oil, the latter regardless of the original refinery treatment, kerosene, jet fuel, light cycle oil (LCO), HVGO or FCC heavy fractions, or by the hydrotreatment of cuts of a petrochemical origin, such as, for example, FOK (fuel oil cracking).

16. The process according to claim 15, wherein the hydrotreated cuts are obtained by the hydrotreatment of gas oil from hydrocracking or FCC.

17. The process according to claim 1, wherein the hydrotreatment is carried out at a temperature ranging from 200°C to 400°C, at a pressure ranging from 20 to 100 bar.

18. The process according to claim 1, wherein the hydrotreated hydrocarbon blends are dearomatized by reaction with hydrogen in the presence of a catalyst consisting of noble metals supported on SiO₂ or Al₂O₃, at a temperature ranging from 200 to 300 °C and a pressure of 20 to 60 atm.

19. The process according to claim 18, carried out at a WSHV ranging from 0.5 to 3 hours⁻¹.

20. The process according to claim 18, effected with a ratio between hydrogen and feedstock (H₂/HC) ranging from 600 to 1,000 Nlt/kg.

21. The process according to claim 1, carried out at a temperature ranging from 250 to 350°C, at a pressure greater than or equal to 50 bar.

22. The process according to claim 21, carried out at a WSHV ranging from 1 to 3 hours⁻¹.

23. The process according to claim 21, effected with a ratio between hydrogen and feedstock (H₂/HC) ranging from 400 to 2,000 Nlt/kg.

24. A catalytic composition comprising:
a) a metallic component selected from:
- iridium, in a quantity greater than or equal to 2% by weight with respect to the total weight of the catalytic composition,
- a mixture of iridium and one or more metals Me selected from Pt, Pd, Ru, Rh, and Re, wherein said mixture is in a quantity greater than or equal to 2% by weight with respect to the total weight of the catalytic composition and is **characterized by** an Ir/Me weight ratio ranging from 2 to 10;
b) an acid component containing a completely amorphous micro-mesoporous silico-alumina having an SiO₂/Al₂O₃ molar ratio ranging from 50 to 500, a surface area greater than 500 m²/g, a pore volume ranging from 0.3 to 1.3 ml/g, an average pore diameter less than 40 Å.

## Patentansprüche

1. Verfahren zur Verbesserung der Treibstoffeigenschaften von wasserstoffbehandelten und gegebenenfalls entaromatisierten Kohlenwasserstoffmischungen durch Umsetzung mit Wasserstoff bei einer Temperatur im Bereich von 250 bis 350°C, bei einem Druck höher als oder gleich 50 bar, in Gegenwart einer katalytischen Zusammensetzung umfassend:
a) einen metallischen Bestandteil ausgewählt aus:
- Iridium, in einer Menge von mehr als oder gleich 2 Gew.-% bezogen auf das Gesamtgewicht der katalytischen Zusammensetzung,
- eine Mischung von Iridium und einem oder mehreren Metallen Me, ausgewählt aus Pt, Pd, Ru, Rh und Re, wobei die Mischung in einer Menge von mehr als oder gleich 2 Gew.-% bezogen auf das Gesamtgewicht der katalytischen Zusammensetzung vorliegt und **gekennzeichnet ist durch** ein Ir/Me-Gewichtsverhältnis im Bereich von 2 bis 10;
b) einen Säurebestandteil enthaltend ein vollständig amorphes mikromesoporöses Siliko-Aluminiumoxid mit einem SiO₂/Al₂O₃-Molverhältnis im Bereich von 50 bis 500, einer Oberfläche von mehr als 500 m²/g, einem Porenvolumen im Bereich von 0,3 bis 1,3 ml/g, sowie einem mittleren Porendurchmesser von weniger als 40 Å.

2. Verfahren nach Anspruch 1, wobei das Siliko-Aluminiumoxid ein SiO₂/Al₂O₃-Molverhältnis im Bereich von 50 bis 300 aufweist.

3. Verfahren nach Anspruch 1, wobei das Siliko-Aluminiumoxid eine Porosität im Bereich von 0,4 bis 0,5 ml/g aufweist.

4. Verfahren nach Anspruch 1, wobei das Siliko-Aluminiumoxid ein Pulver-Diffraktometriespektrum (XRD) aufweist, das keine kristalline Struktur aufweist und keinen Peak zeigt.

5. Verfahren nach Anspruch 1, wobei der Bestandteil (b) der katalytischen Zusammensetzung Siliko-Aluminiumoxid in extrudierter Form mit einem Liganden enthält.

6. Verfahren nach Anspruch 5, wobei der Ligand ausgewählt ist aus Aluminiumoxid, Boehmit oder Pseudoboehmit.

7. Verfahren nach Anspruch 1 oder Anspruch 6, wobei Bestandteil (b) Siliko-Aluminiumoxid in extrudierter Form mit Aluminiumoxid enthält und hergestellt wird mittels eines Verfahrens, welches die folgenden Schritte umfasst:
(A) Herstellen einer wässrigen Lösung von Tetraalkylammoniumhydroxid (TAA-OH), einer löslichen Aluminiumverbindung, die in der Lage ist zu Al₂O₃ zu hydrolysieren, sowie einer Siliziumverbindung, die in der Lage ist zu SiO₂ zu hydrolysieren, im folgenden Molverhältnis zueinander:
| | |
|---|---|
| SiO₂/Al₂O₃ | von 30/1 bis 500/1 |
| TAA-OH/SiO₂ | von 0,05/1 bis 0,2/1 |
| H₂O/SiO₂ | von 5/1 bis 40/1 |
(B) Erwärmen der so erhaltenen Lösung um deren Hydrolyse und Gelierung zu bewirken und eine Mischung mit einer Viskosität im Bereich von 0,01 bis 100 Pa·s zu erhalten;
(C) Zusetzen zu dieser Mischung: Erstens einen Liganden, zugehörig zur Gruppe der Boehmite oder Pseudoboehmite, in einem Gewichtsverhältnis zu der Mischung A im Bereich von 0,05 bis 0,5, und anschließend Zusetzen von mineralischer oder organischer Säure in einer Menge im Bereich von 0,5 bis 8,0 g pro 100 g des Liganden;
(D) Erwärmen der unter Punkt (C) erhaltenen Mischung auf eine Temperatur im Bereich von 40 bis 90°C unter Vermischung bis eine homogene Paste erhalten wird, die einer Extrusion und Granulierung unterworfen wird;
(E) Trocknen des extrudierten Produktes und Kalzinieren desselben in einer oxidierenden Atmosphäre.

8. Verfahren nach einem oder mehreren der vorhergehenden Ansprüche, wobei der metallische Bestandteil (a) ausgewählt ist aus Iridium oder Mischungen von Iridium und Platin.

9. Verfahren nach Anspruch 1 oder 8, wobei der metallische Bestandteil Iridium in einer Menge im Bereich von 2 bis 10 Gew.-% bezüglich des Gesamtgewichts der katalytischen Zusammensetzung ist.

10. Verfahren nach Anspruch 9, wobei das Iridium in einer Menge von mehr als oder gleich 2 und weniger als 5 Gew.-% vorliegt.

11. Verfahren nach Anspruch 1 oder 8, wobei der metallische Bestandteil aus Iridium und einem oder mehreren Metallen besteht, und in einer Menge von mehr als oder gleich 2 und weniger als 5 Gew.-% vorliegt.

12. Verfahren nach Anspruch 1, wobei die wasserstoffbehandelten Kohlenwasserstoffmischungen Mischungen mit Siedepunkten im Bereich von 150 bis 450°C sind.

13. Verfahren nach Anspruch 12, wobei die wasserstoffbehandelten Kohlenwasserstoffmischungen Mischungen mit Siedepunkten im Bereich von 180 bis 360°C sind.

14. Verfahren nach Anspruch 13, wobei die wasserstoffbehandelten Kohlenwasserstoffmischungen Mischungen mit Siedepunkten im Bereich von 220 bis 360°C sind.

15. Verfahren nach Anspruch 1 oder Anspruch 12, wobei die wasserstoffbehandelten Kohlenwasserstoffmischungen erhalten werden aus der Wasserstoffbehandlung von Ölfraktionen wie etwa Naphtha, Gasöl, letzteres unabhängig von der ursprünglichen Raffinierbehandlung, Kerosin, Düsentreibstoff, Leichtzyklusöl (LCO), HVGO- oder FCC-Schwerfraktionen oder durch die Wasserstoffbehandlung von Fraktionen petrochemischen Ursprungs, wie z.B. FOK (Schwerölcracking).

16. Verfahren nach Anspruch 15, wobei die wasserstoffbehandelten Fraktionen erhalten werden durch Wasserstoffbehandlung von Gasöl aus Hydrocracking oder FCC.

17. Verfahren nach Anspruch 1, wobei die Wasserstoffbehandlung bei einer Temperatur im Bereich von 200°C bis 400°C und einem Druck im Bereich von 20 bis 100 bar durchgeführt wird.

18. Verfahren nach Anspruch 1, wobei die wasserstoffbehandelten Kohlenwasserstoffmischungen entaromatisiert sind durch Umsetzung mit Wasserstoff in Gegenwart eines Katalysators bestehend aus Edelmetallen geträgert auf SiO₂ oder Al₂O₃, bei einer Temperatur im Bereich von 200 bis 300°C und einem Druck von 20 bis 60 atm.

19. Verfahren nach Anspruch 18, durchgeführt bei einem WSHV im Bereich von 0,5 bis 3 Stunden⁻¹.

20. Verfahren nach Anspruch 18, bewirkt mit einem Verhältnis zwischen Wasserstoff und Zuleitung (H₂/Kohlenwasserstoff) im Bereich von 600 bis 1000 Nlt/kg.

21. Verfahren nach Anspruch 1, durchgeführt bei einer Temperatur im Bereich von 250 bis 350°C und einem Druck von mehr als oder gleich 50 bar.

22. Verfahren nach Anspruch 21, durchgeführt bei einem WSHV im Bereich von 1 bis 3 Stunden⁻¹.

23. Verfahren nach Anspruch 21, bewirkt mit einem Verhältnis zwischen Wasserstoff und Zuleitung (H₂/Kohlenwasserstoff) im Bereich von 400 bis 2000 Nlt/kg.

24. Katalytische Zusammensetzung umfassend:
a) einen metallischen Bestandteil ausgewählt aus:
- Iridium in einer Menge von mehr als oder gleich 2 Gew.-% bezogen auf das Gesamtgewicht der katalytischen Zusammensetzung,
- einer Mischung aus Iridium und einem oder mehreren Metallen Me ausgewählt aus Pt, Pd, Ru, Rh und Re, wobei die Mischung in einer Menge von mehr als gleich 2 Gew.-% bezogen auf das Gesamtgewicht der katalytischen Zusammensetzung vorliegt und **gekennzeichnet ist durch** ein Ir/Me-Gewichtsverhältnis im Bereich von 2 bis 10;
b) einen Säurebestandteil enthaltend ein vollständig amorphes mikromesoporöses Siliko-Aluminiumoxid mit einem SiO₂/Al₂O₃-Molverhältnis im Bereich von 50 bis 500, einer Oberfläche von mehr als 500 m²/g, einem Porenvolumen im Bereich von 0,3 bis 1,3 ml/g, sowie einem mittleren Porendurchmesser von weniger als 40 Å.

## Revendications

1. Procédé destiné à améliorer les propriétés combustibles de mélanges d'hydrocarbures hydrotraités, et éventuellement désaromatisés, par réaction avec de l'hydrogène, à une température allant de 250 à 350°C, à une pression supérieure ou égale à 50 bar, en présence d'une composition catalytique comprenant:
a) un composant métallique sélectionné parmi:
- l'iridium, en une quantité supérieure ou égale à 2 % en poids par rapport au poids total de la composition catalytique,
- un mélange d'iridium et d'un ou plusieurs métaux Me sélectionnés parmi Pt, Pd, Ru, Rh et Re, dans lequel ledit mélange est en une quantité supérieure ou égale à 2 % en poids par rapport au poids total de la composition catalytique et est **caractérisé par** un rapport pondéral Ir/Me allant de 2 à 10 ;
b) un composant acide contenant de la silico-alumine micro-mésoporeuse complètement amorphe ayant un rapport molaire SiO₂/Al₂O₃ allant de 50 à 500, une surface spécifique supérieure à 500 m²/g, un volume de pores allant de 0,3 à 1,3 ml/g, un diamètre de pores moyen inférieur à 40 Å.

2. Procédé selon la revendication 1, dans lequel la silico-alumine a un rapport molaire SiO₂/Al₂O₃ allant de 50 à 300.

3. Procédé selon la revendication 1, dans lequel la silico-alumine a une porosité allant de 0,4 à 0,5 ml/g.

4. Procédé selon la revendication 1, dans lequel la silico-alumine a un spectre XRD obtenu à partir de poudres qui n'a pas de structure cristalline et qui ne présente aucun pic.

5. Procédé selon la revendication 1, dans lequel le composant (b) de la composition catalytique contient de la silico-alumine sous forme extrudée avec un ligand.

6. Procédé selon la revendication 5, dans lequel le ligand est sélectionné parmi l'oxyde d'aluminium, la boehmite ou la pseudoboehmite.

7. Procédé selon la revendication 1 ou la revendication 6, dans lequel le composant (b) contient de la silico-alumine sous forme extrudée avec de l'alumine et est préparé au moyen d'un procédé qui comprend les étapes suivantes :
(A) préparer une solution aqueuse d'hydroxyde de tétraalkylammonium (TAA-OH), d'un composé d'aluminium soluble capable de s'hydrolyser dans Al₂O₃ et d'un composé de silicium capable de s'hydrolyser dans SiO₂, dans les rapports molaires suivants les uns avec les autres :
| | |
|---|---|
| SiO₂/Al₂O₃ | de 30/1 à 500/1 |
| TAA-OH/SiO₂ | de 0,05/1 à 0,2/1 |
| H₂O/SiO₂ | de 5/1 à 40/1 |
(B) chauffer la solution ainsi obtenue pour provoquer son hydrolyse et sa gélification et obtenir un mélange ayant une viscosité allant de 0,01 à 100 Pa·s;
(C) ajouter audit mélange en premier lieu un ligand appartenant au groupe des boehmites ou des pseudoboehmites, selon un rapport pondéral avec le mélange A allant de 0,05 à 0,5, et ensuite un acide minéral ou organique en une quantité allant de 0,5 à 8 g pour 100 g de ligand ;
(D) chauffer le mélange obtenu au point c), en mélangeant, à une température allant de 40 à 90°C jusqu'à ce qu'une pâte homogène soit obtenue, qui est soumise à une extrusion et à une granulation ;
(E) sécher le produit extrudé et le calciner dans une atmosphère oxydante.

8. Procédé selon l'une ou plusieurs des revendications précédentes, dans lequel le composant métallique (a) est sélectionné parmi l'iridium ou les mélanges d'iridium et de platine.

9. Procédé selon la revendication 1 ou 8, dans lequel le composant métallique est l'iridium en une quantité allant de 2 à 10 % en poids par rapport au poids total de la composition catalytique.

10. Procédé selon la revendication 9, dans lequel l'iridium est en une quantité supérieure ou égale à 2 et inférieure à 5 % en poids.

11. Procédé selon la revendication 1 ou 8, dans lequel le composant métallique est constitué par l'iridium et un ou plusieurs métaux, et est en une quantité supérieure ou égale à 2 et inférieure à 5 % en poids.

12. Procédé selon la revendication 1, dans lequel les mélanges d'hydrocarbures hydrotraités sont des mélanges ayant des points d'ébullition situés dans la plage allant de 150 à 450°C.

13. Procédé selon la revendication 12, dans lequel les mélanges d'hydrocarbures hydrotraités sont des mélanges ayant des points d'ébullition situés dans la plage allant de 180 à 360°C.

14. Procédé selon la revendication 13, dans lequel les mélanges d'hydrocarbures hydrotraités sont des mélanges ayant des points d'ébullition situés dans la plage allant de 220 à 360°C.

15. Procédé selon la revendication 1 ou la revendication 12, dans lequel les mélanges d'hydrocarbures hydrotraités sont obtenus à partir de l'hydrotraitement de coupes de pétrole telles que naphta, gasoil, ce dernier indépendamment du traitement d'origine en raffinerie, kérosène, carburéacteur, gasoil léger de craquage catalytique (LCO), les fractions lourdes HVGO ou CCF, ou par l'hydrotraitement de coupes d'origine pétrochimique, telles que, par exemple, le FOK (craquage de mazout).

16. Procédé selon la revendication 15, dans lequel les coupes hydrotraitées sont obtenues par l'hydrotraitement de gasoil à partir d'un hydrocraquage ou d'un CCF.

17. Procédé selon la revendication 1, dans lequel l'hydrotraitement est réalisé à une température allant de 200°C à 400°C, à une pression allant de 20 à 100 bar.

18. Procédé selon la revendication 1, dans lequel les mélanges d'hydrocarbures hydrotraités sont désaromatisés par réaction avec de l'hydrogène en présence d'un catalyseur constitué par des métaux nobles supportés sur SiO₂ ou Al₂O₃, à une température allant de 200°C à 300°C et une pression de 20 à 60 atm.

19. Procédé selon la revendication 18, réalisé à un PPH allant de 0,5 à 3 heures⁻¹.

20. Procédé selon la revendication 18, effectué avec un rapport entre l'hydrogène et la charge d'alimentation (H₂/HC) allant de 600 à 1000 Nlt/kg.

21. Procédé selon la revendication 1, réalisé à une température allant de 250 à 350°C, à une pression supérieure ou égale à 50 bar.

22. Procédé selon la revendication 21, réalisé à un PPH allant de 1 à 3 heures⁻¹.

23. Procédé selon la revendication 21, effectué avec un rapport entre l'hydrogène et la charge d'alimentation (H₂/HC) allant de 400 à 2000 Nlt/kg.

24. Composition catalytique comprenant :
a) un composant métallique sélectionné parmi :
- l'iridium, en une quantité supérieure ou égale à 2 % en poids par rapport au poids total de la composition catalytique,
- un mélange d'iridium et d'un ou plusieurs métaux Me sélectionnés parmi Pt, Pd, Ru, Rh et Re, dans lequel ledit mélange est en une quantité supérieure ou égale à 2 % en poids par rapport au poids total de la composition catalytique et est **caractérisé par** un rapport pondéral Ir/Me allant de 2 à 10 ;
b) un composant acide contenant de la silico-alumine micro-mésoporeuse complètement amorphe ayant un rapport molaire SiO₂/Al₂O₃ allant de 50 à 500, une surface spécifique supérieure à 500 m²/g, un volume de pores allant de 0,3 à 1,3 ml/g, un diamètre de pores moyen inférieur à 40 Å.
